# EUROPÄISCHE PATENTSCHRIFT

(11) **EP 3 533 285 B1**
(45) Veröffentlichungstag und Bekanntmachung des Hinweises auf die Patenterteilung: **26.05.2021**
(21) Anmeldenummer: 17791383.7
(22) Anmeldetag: 27.10.2017
(51) Int. Cl.: H05B 3/14, H05B 3/20, H05B 3/06

(54) **HEIZFARBE, FLÄCHENHEIZVORRICHTUNG UND KIT ZUM HERSTELLEN EINER FLÄCHENHEIZVORRICHTUNG**
HEATING PAINT, SURFACE HEATING DEVICE, AND KIT FOR PRODUCING A SURFACE HEATING DEVICE
COULEUR CHAUFFANTE, DISPOSITIF CHAUFFANT DE GRANDE SURFACE ET KIT DE FABRICATION D'UN DISPOSITIF CHAUFFANT DE GRANDE SURFACE

(30) Priorität: 28.10.2016 DE 102016120724
(43) Veröffentlichungstag der Anmeldung: 04.09.2019
(73) Patentinhaber: Future Carbon GmbH, 95448 Bayreuth (DE)
(72) Erfinder: FORERO, Stefan, 95466 Weidenberg (DE); ASCHENBRENNER, Ortrud, 95447 Bayreuth (DE); KANDZIORA, Thomas, 86899 Landsberg (DE); SCHÜTZ, Walter, 95466 Weidenberg (DE); ZEYN, Klaus, 80639 München (DE)
(74) Vertreter: Müller, Christian Stefan Gerd
(86) Internationale Anmeldenummer: PCT/EP2017/077586
(87) Internationale Veröffentlichungsnummer: WO 2018/078087

(56) Entgegenhaltungen:
- DE-U1-202014 009 744
- US-A- 3 696 054
- US-A- 3 866 016

## Beschreibung

### Gebiet der Erfindung

Die vorliegende Erfindung betrifft eine Heizfarbe, die einfach auch von Laien verwendet werden kann, um eine Flächenheizvorrichtung an einer Wand zu erzeugen. Weiterhin betrifft die Erfindung eine Flächenheizvorrichtung, die insbesondere dazu geeignet ist, einen Raum, wie einen Raum eines Hauses, zu beheizen, sowie einen Kit zum Herstellen einer Flächenheizvorrichtung an einer Wand. Außerdem betrifft die Erfindung Verwendungen der erfindungsgemäßen Gegenstände, insbesondere zur Herstellung einer Flächenheizvorrichtung bzw. zum Beheizen eines Raumes, sowie entsprechende Verfahren.

### Hintergrund

Die Beheizung der Oberfläche eines Objektes oder Körpers ist in vielen Lebenslagen erforderlich, wobei hierzu vielerorts elektrische Heizelemente eingesetzt werden können, die beispielsweise aus mäanderförmigen Heizdrähten bestehen. Ein Nachteil dieser Art der Beheizung besteht darin, dass bei Beschädigung des Heizdrahtes an lediglich einer Stelle das komplette Heizelement ausfällt. Außerdem kann es dadurch, dass lediglich ein kleiner Teil dieser elektrischen Heizelemente (nämlich die Heizdrähte) die gewünschte Wärme erzeugt, damit das gesamte Heizelement eine gewünschte Wärmemenge bereitstellen kann, zu unerwünschten "Hot Spots" kommen und eine gleichmäßige Temperaturverteilung kann nicht garantiert werden.

Um diese Probleme zu umgehen, sind auch Heizelemente bekannt, die darauf basieren, dass eine Spannung und/oder ein elektrischer Strom an eine Heizschicht angelegt wird, in der elektrisch leitfähige faserige Materialien (wie Carbonfasern oder Kohlenstoff-Nanotubes) im Wesentlichen gleichmäßig verteilt sind; vgl. DE 20 2010 009 208 U1 und DE 20 2014 009 744 U1. Zur Herstellung solcher Heizelemente ist es daher erforderlich, dass zunächst flüssige Dispersionen hergestellt werden können, in denen die elektrisch leitfähigen faserigen Materialien ebenfalls im Wesentlichen gleichmäßig verteilt sind. Jedoch weisen diese faserigen, elektrisch leitfähigen Materialien aufgrund ihrer hohen Neigung zur Selbstaggregation die Nachteile auf, dass sie nur schwer und unter hohem technischem Aufwand in Dispersionen überführt werden können und dass die dispergierten Fasern stark dazu neigen, wieder zu aggregieren. Das führt dazu, dass einerseits die Herstellungskosten von Dispersionen faseriger Leitfähigkeitsadditive (und somit auch der daraus herstellbaren Heizelemente) sehr hoch sind und anderseits solche Dispersionen, insbesondere solchen auf Wasserbasis, eine geringe Lagerstabilität aufweisen und daher vor Auftragung unter hohem technischem Aufwand wieder dispergiert werden müssten. Die US 3,696,054 beschreibt Farbzusammensetzungen und deren Herstellung, die aufgetragen und getrocknet werden können, um elektrisch leitfähige Filme auszubilden.

### Zusammenfassung der Erfindung

Aufgabe der vorliegenden Erfindung ist somit, eine Heizfarbe bereitzustellen, die lagerstabil ist und einfach auch von Laien verwendet werden kann, um eine Flächenheizvorrichtung an einer Wand zu erzeugen.

Diese Aufgabe wird erfindungsgemäß durch die in den Patentansprüchen beschriebenen Gegenstände gelöst.

Insbesondere betrifft die Erfindung in einem ersten Aspekt eine Heizfarbe, die mindestens zwei Leitfähigkeitsadditive und mindestens ein Bindemittel umfasst, wobei die Leitfähigkeitsadditive Graphit und Ruß umfassen, das Bindemittel ein elektrisch nicht leitfähiges Polymer umfasst, und die Heizfarbe frei von elektrisch leitfähigen Carbonfasern und Kohlenstoff-Nanotubes ist und wobei der Graphit synthetischen Ursprungs ist. Alternativ umfasst die Heizfarbe mindestens zwei Leitfähigkeitsadditive und mindestens ein anorganisches Bindemittel, wobei die Leitfähigkeitsadditive Graphit und Ruß umfassen, die Heizfarbe frei von elektrisch leitfähigen Carbonfasern und Kohlenstoff-Nanotubes ist und der Graphit synthetischen Ursprungs ist.

In einem zweiten Aspekt wird erfindungsgemäß eine Flächenheizvorrichtung bereitgestellt, die folgende Komponenten aufweist: (a) eine Heizschicht, die auf der zu beheizenden Wand unter Verwendung der Heizfarbe des ersten Aspekts aufbringbar ist; (b) zwei elektrisch leitfähige Kontaktelemente, die an der Heizschicht derart anordbar oder angeordnet sind, dass die Heizschicht mit elektrischer Spannung und/oder elektrischen Strom beaufschlagbar ist; und (e) zwei Übergangselemente, die an die Kontaktelemente, insbesondere elektrisch leitend, angebracht oder anbringbar sind, wobei jedes der zwei Übergangselemente ein Halteelement zum kraft- und/oder formschlüssigen Befestigen des Übergangselements an der Wand in einem Bereich der zu beheizenden Wand, auf dem keine Heizschicht und keine Kontaktelement aufgebracht ist, aufweist. In einer Ausführungsform weist die erfindungsgemäße Flächenheizvorrichtung ferner (c) ein Steuerungselement, das eine Spannungsquelle und eine Steuerungsvorrichtung zum Steuern der Flächenheizvorrichtung umfasst; und (d) zwei elektrische Leitungen, wobei die erste elektrische Leitung mit einem der Pole der Spannungsquelle verbunden ist und die zweite elektrische Leitung mit dem anderen Pol der Spannungsquelle verbunden ist; auf, wobei das erste Übergangselement die erste elektrische Leitung mit einem der zwei elektrisch leitfähigen Kontaktelemente elektrisch leitend verbindet und das zweite Übergangselement die zweite elektrische Leitung mit dem anderen der zwei elektrisch leitfähigen Kontaktelemente elektrisch leitend verbindet.

In einem dritten Aspekt wird erfindungsgemäß ein Kit zum Herstellen einer Flächenheizvorrichtung an einer Wand bereitgestellt, wobei das Kit folgende Komponenten umfasst: (1) eine erfindungsgemäße Heizfarbe, wie sie hierin im ersten Aspekt beschrieben ist, d.h. eine Heizfarbe, die mindestens zwei Leitfähigkeitsadditive und mindestens ein Bindemittel umfasst, wobei die Leitfähigkeitsadditive Graphit und Ruß umfassen, das Bindemittel ein elektrisch nicht leitfähiges Polymer oder ein anorganisches Bindemittel umfasst, und die Heizfarbe frei von elektrisch leitfähigen Carbonfasern und Kohlenstoff-Nanotubes ist und wobei der Graphit synthetischen Ursprungs ist; (2) mindestens zwei elektrisch leitfähige Kontaktelemente; und (5) mindestens zwei Übergangselemente, die an die Kontaktelemente, insbesondere elektrisch leitend, anbringbar sind, wobei jedes der zwei Übergangselemente mindestens ein Halteelement zum kraft- und/oder formschlüssigen Befestigen des Übergangselements an einer Wand aufweist. In einer Ausführungsform weist das erfindungsgemäße Kit ferner (3) ein Steuerungselement, das eine Spannungsquelle und eine Steuerungsvorrichtung zum Steuern der Flächenheizvorrichtung umfasst; und (4) mindestens zwei elektrische Leitungen und gegebenenfalls (6) eine Gebrauchsanleitung auf.

In einem vierten Aspekt wird erfindungsgemäß eine Verwendung einer erfindungsgemäßen Heizfarbe oder eines erfindungsgemäßen Kits zur Herstellung einer Flächenheizvorrichtung an einer Wand bereitgestellt.

In einem fünften Aspekt wird erfindungsgemäß eine Verwendung einer erfindungsgemäßen Flächenheizvorrichtung zum Beheizen eines Raumes oder zum Abschirmen des Raumes vor elektromagnetischer Strahlung bereitgestellt.

In einem sechsten Aspekt wird erfindungsgemäß ein Verfahren zur Herstellung einer Flächenheizvorrichtung an einer Wand bereitgestellt, das den Schritt eines Auftragens einer erfindungsgemäßen Heizfarbe auf die Wand umfasst.

In einen siebten Aspekt wird erfindungsgemäß ein Verfahren zum Beheizen eines Raumes bereitgestellt, das die Schritte umfasst: (i) Auftragen einer erfindungsgemäßen Heizfarbe auf mindestens eine zu beheizende Wand des Raumes zur Erzeugung mindestens einer Heizschicht und (ii) Beaufschlagen der Heizschicht mit elektrischer Spannung und/oder elektrischem Strom.

In einer Ausführungsform des sechsten oder siebten Aspekts umfasst das Verfahren ferner die folgenden Schritte: (a) Anbringen von zwei Kontaktelementen für jede der mindestens einen Heizschicht an der zu beheizenden Wand; (b) Bereitstellen von zwei Übergangselementen, die an die Kontaktelemente, insbesondere elektrisch leitend, anbringbar sind, für jede der mindestens einen Heizschicht, wobei jedes der zwei Übergangselemente ein Halteelement zum kraft- und/oder formschlüssigen Befestigen des Übergangselements an der Wand aufweist; und (c) Herstellen einer elektrisch leitenden Verbindung zwischen dem ersten Kontaktelement und dem ersten Übergangselement sowie zwischen dem zweiten Kontaktelement und dem zweiten Übergangselement für jede der mindestens einen Heizschicht; und gegebenenfalls (d) kraft- und/oder formschlüssiges Befestigen der Übergangselemente an der Wand.

### Heizfarbe

Obwohl der erste Aspekt der vorliegenden Erfindung eine Heizfarbe betrifft, soll verstanden werden, dass der Begriff "Heizfarbe" auch synonyme Begriffe wie "Heizanstrich" und "Heizlack" umfassen soll.

Die in der erfindungsgemäßen Heizfarbe enthaltenen Komponenten Graphit und Ruß sind elektrisch leitende Materialien, die hierin als Leitfähigkeitsadditive bezeichnet werden. Der Fachmann kennt neben Graphit und Ruß weitere Leitfähigkeitsadditive, z.B. Kohlenstoff-Nanotubes, Carbonfasern und Kohlenstoff-Nanofasern. Jedoch weisen diese faserigen Leitfähigkeitsadditive aufgrund ihrer hohen Neigung zur Selbstaggregation die Nachteile auf, dass sie nur schwer und unter hohem technischem Aufwand in Dispersionen überführt werden können und dass die dispergierten Fasern stark dazu neigen, wieder zu aggregieren. Das führt dazu, dass einerseits die Herstellungskosten von Dispersionen faseriger Leitfähigkeitsadditive sehr hoch sind und anderseits solche Dispersionen eine geringe Lagerstabilität aufweisen.

Um diese Nachteile zu vermeiden, ist die erfindungsgemäße Heizfarbe frei von elektrisch leitfähigen Carbonfasern und Kohlenstoff-Nanotubes, insbesondere frei von elektrisch leitfähigen Carbonfasern, Kohlenstoff-Nanofasern und Kohlenstoff-Nanotubes. In diesem Zusammenhang bedeutet der Ausdruck "frei von elektrisch leitfähigen Carbonfasern und Kohlenstoff-Nanotubes", dass der Beitrag, den die elektrisch leitfähigen Carbonfasern und Kohlenstoff-Nanotubes in der erfindungsgemäßen Heizfarbe zur elektrischen Leitfähigkeit leisten, in Bezug auf den Beitrag, den Graphit und Ruß in der erfindungsgemäßen Heizfarbe zur elektrischen Leitfähigkeit leisten, im Wesentlichen vernachlässigbar ist. Dies ist beispielsweise der Fall, wenn die elektrisch leitfähigen Carbonfasern und Kohlenstoff-Nanotubes in einer Gesamtmenge von weniger als 0,5% (vorzugsweise weniger als 0,1%, mehr bevorzugt weniger als 0,05%, mehr bevorzugt weniger als 0,01%, mehr bevorzugt weniger als 0,005%, mehr bevorzugt weniger als 0,001%, mehr bevorzugt weniger als 0,0005%, mehr bevorzugt weniger als 0,0001%) bezüglich des Gesamtgewichts der in der erfindungsgemäßen Heizfarbe enthaltenen Leitfähigkeitsadditive Graphit und Ruß vorhanden sind. Der Ausdruck "frei von elektrisch leitfähigen Carbonfasern und Kohlenstoff-Nanotubes" in Bezug auf die in der erfindungsgemäßen Flächenheizvorrichtung enthaltenen Heizschicht soll in analoger Weise interpretiert werden, d.h. der Beitrag, den die elektrisch leitfähigen Carbonfasern und Kohlenstoff-Nanotubes in der Heizschicht zur elektrischen Leitfähigkeit leisten, ist in Bezug auf den Beitrag, den Graphit und Ruß in der Heizscheit zur elektrischen Leitfähigkeit leisten, im Wesentlichen vernachlässigbar (beispielsweise wenn die elektrisch leitfähigen Carbonfasern und Kohlenstoff-Nanotubes in einer Gesamtmenge von weniger als 0,5% (vorzugsweise weniger als 0,1%, mehr bevorzugt weniger als 0,05%, mehr bevorzugt weniger als 0,01%, mehr bevorzugt weniger als 0,005%, mehr bevorzugt weniger als 0,001%, mehr bevorzugt weniger als 0,0005%, mehr bevorzugt weniger als 0,0001%) bezüglich des Gesamtgewichts der in der Heizschicht enthaltenen Leitfähigkeitsadditive Graphit und Ruß vorhanden sind). Auch der Ausdruck "frei von elektrisch leitfähigen Carbonfasern, Kohlenstoff-Nanofasern und Kohlenstoff-Nanotubes" soll in analoger Weise verstanden werden (d.h. der Beitrag, den die elektrisch leitfähigen Carbonfasern, Kohlenstoff-Nanofasern und Kohlenstoff-Nanotubes in der Heizfarbe (bzw. Heizschicht) zur elektrischen Leitfähigkeit leisten, ist in Bezug auf den Beitrag, den Graphit und Ruß in der Heizfarbe (bzw. Heizschicht) zur elektrischen Leitfähigkeit leisten, im Wesentlichen vernachlässigbar, beispielsweise wenn die elektrisch leitfähigen Carbonfasern, Kohlenstoff-Nanofasern und Kohlenstoff-Nanotubes in einer Gesamtmenge von weniger als 0,5% (vorzugsweise weniger als 0,1%, mehr bevorzugt weniger als 0,05%, mehr bevorzugt weniger als 0,01%, mehr bevorzugt weniger als 0,005%, mehr bevorzugt weniger als 0,001%, mehr bevorzugt weniger als 0,0005%, mehr bevorzugt weniger als 0,0001%) bezüglich des Gesamtgewichts der in der Heizfarbe (bzw. Heizschicht) enthaltenen Leitfähigkeitsadditive Graphit und Ruß vorhanden sind).

In einer Ausführungsform weist die erfindungsgemäße Heizfarbe (bzw. die daraus erzeugbare Heizschicht) lediglich Graphit und Ruß als Leitfähigkeitsadditive auf.

Die Eigenschaften der vorstehend genannten Leitfähigkeitsadditive werden im Folgenden genauer erläutert.

Graphit ist ein sehr häufig vorkommendes Mineral und gehört zur Ordnung der Halbmetalle und Nichtmetalle. Er ist neben Diamant und Fullerenen die dritte unter irdischen Normalbedingungen stabile Form (Modifikation) des Kohlenstoffs und kristallisiert meist im hexagonalen, sehr selten auch im trigonalen Kristallsystem.

Graphit entwickelt undurchsichtige, graue bis schwarze Kristalle in sechseckiger, tafeliger, schuppiger oder stängeliger Form, die auf den Kristallflächen Metallglanz aufweisen.

Im kristallinen Graphit liegen parallel verlaufende ebene Schichten, die "Basalebenen" oder "GraphenSchichten", vor. Eine Schicht besteht aus kovalent verknüpften Sechsecken, deren Kohlenstoffatome sp²-hybridisiert sind. Innerhalb dieser Ebenen beträgt die Bindungsenergie zwischen den Kohlenstoffatomen 4,3 eV, zwischen ihnen dagegen lediglich 0,07 eV. Aus dieser extremen Richtungsabhängigkeit der Bindungskräfte resultiert eine deutliche Anisotropie der mechanischen, elektrischen und thermischen Eigenschaften des Graphits:
- leichte Spaltbarkeit des reinen Graphits entlang der Basalebenen, deutlich höhere Festigkeit entlang der Kristallschichten;
- thermische und elektrische Isolation orthogonal zu den Basalebenen gegenüber einer fast metallischen Leitfähigkeit entlang der Ebenen.

Die Leitfähigkeit innerhalb einer Ebene wird durch die Delokalisation der π-Elektronen ermöglicht. Weisen die Ebenen keine feste Korrelation zueinander auf, spricht man von turbostratischem Kohlenstoff.

Graphit synthetischen Ursprungs kann ein Produkt der Verkokung von dafür geeigneten Kunststoffen, Pech, Erdöl, Kohle und dergleichen sein.

Ruß ist ein schwarzer, pulverförmiger Feststoff, der je nach Qualität und Verwendung zu 80% oder mehr aus Kohlenstoff besteht.

Je nach ihrem Anwendungsgebiet besitzen Ruße spezielle Eigenschaftsprofile, die durch die Art des Herstellverfahrens und durch Variation der Prozessparameter gezielt beeinflusst werden.

Ruße, ihre Eigenschaften, Herstellungsverfahren, Verwendungen und so weiter sind bereits weitreichend beschrieben, so dass an dieser Stelle auf die einschlägige Fachliteratur verwiesen wird.

Kohlenstoff-Nanotubes (CNTs) bestehen aus zum Zylinder aufgerollten, geschlossen GraphenSchichten. Einzelne Röhren nennt man "single wall carbon nanotubes" (SWCNT), Teilchen aus konzentrisch gestapelten Röhren aufsteigenden Durchmessers werden "multiwall carbon nanotubes" (MWCNT) genannt.

CNTs kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNTs. Hierbei entstehen die CNT aus gasförmigen Kohlenstofflieferanten (Kohlenwasserstoffe, Alkohole, CO, CO₂) auf metallischen, katalytisch aktiven Substraten.

Typischerweise weisen SWCNT einen Durchmesser von 0,5 - 4 nm, MWCNT einen Durchmesser zwischen 6 und 100 nm auf. Die Länge von CNTs kann bis zu einigen mm betragen.

Die physikalischen Eigenschaften von CNTs entsprechen weitestgehend jenen des Graphits entlang der Basalebenen.

CNTs werden heute als mechanische Verstärkung, elektrisch und thermisch leitfähiges Additiv in Polymeren, Keramiken und Metallen eingesetzt. Dazu werden die CNTs oft an ihrer Oberfläche chemisch modifiziert, um den Anforderungen einer guten Dispergierbarkeit und Anbindung an die Matrix, die auch als Grundmaterial des Heizmittels bezeichnet werden kann, zu genügen. In der Regel werden die CNTs dem Matrixmaterial zugegeben. Somit soll der Begriff "CNTs" sowohl unmodifizierte als auch modifizierte (insbesondere seitenwandmodifizierte) CNTs umfassen. Aufgrund des hohen Aspektverhältnisses und der hohen spezifischen Oberfläche sind nur Komposite mit verhältnismäßig niedrigem CNT-Gehalt darstellbar.

Carbonfasern (auch Kohlenstofffasern genannt) sind industriell hergestellte Fasern. Man unterscheidet isotrope und anisotrope Typen, wobei isotrope Fasern nur geringe Festigkeiten aufweisen und sich anisotrope Fasern durch hohe Festigkeiten und Steifigkeiten bei gleichzeitig geringer Bruchdehnung in axialer Richtung auszeichnen. Der Durchmesser einer Carbonfaser beträgt etwa 5 bis 9 µm und ist somit größer als der von Kohlenstoff-Nanofasern oder CNTs.

Kohlenstoff-Nanofasern (CNF) bestehen aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen die in einem Winkel ≠ 90° angeordnet sind. Diese CNF können massiv oder auch hohl sein. Ihre Durchmesser liegen im Bereich 50 nm - 1 µm und ihre Längen können bis zu mm betragen. Im Falle, dass die Graphenschichten in einen Winkel = 90° zur Filamentachse angeordnet sind spricht man von 'Platelet' CNF. Ihre Durchmesser liegen im Bereich von 50 bis 500 nm und ihre Längen können bis zu 50 µm betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

In der erfindungsgemäßen Heizfarbe ist mindestens ein Bindemittel enthalten, wobei das Bindemittel vorzugsweise ein elektrisch nicht leitendes Polymer umfasst. Unter "Bindemittel" wird erfindungsgemäß eine Verbindung verstanden, durch die Partikel (z.B. Leitfähigkeitsadditive, insbesondere Graphit und Ruß) auf einer Wand derart aufbringbar sind, dass die Partikel zusammen mit dem Bindemittel (und gegebenenfalls mit weiteren Substanzen) auf der Wand haften. Das Bindemittel fördert also die Kohäsion der Partikel in der Heizfarbe/Heizschicht und die Adhäsion der Heizfarbe/Heizschicht an der Wand. Bindemittel können organisch oder anorganisch ausgebildet sein. Vor der Auftragung auf die Wand werden das Bindemittel und die Partikel (und gegebenenfalls weitere Substanzen wie Zusatzstoffe) intensiv vermischt, damit sie sich gleichmäßig verteilen und alle Partikel gleichmäßig mit dem Bindemittel benetzt werden.

Das in der Heizfarbe und der Heizschicht vorhandene nicht elektrisch leitfähige Polymer ist nicht besonders begrenzt und beinhaltet verschiedene Arten von Polymeren, insbesondere thermoplastische Polymere (auch Thermoplaste genannt), Elastomere und Reaktivharze, gegebenenfalls im Gemisch mit einem oder mehreren Zusatzstoffen (wie Härtern und Beschleunigern). Unter Polymeren versteht man chemische Verbindungen, die aus einer oder wenigen Sorten von gleichartigen Einheiten (Monomeren) aufgebaut sind. Solche Moleküle sind meist kettenartig oder verzweigt aufgebaut und weisen kovalente Bindungen zwischen den Monomeren auf. Nachfolgend werden einige, jedoch nicht ausschließliche Beispiele für bevorzugte Polymere beschrieben, die jeweils einzeln, oder aber in jeder beliebigen Kombination zum Einsatz kommen können. Der Anteil des nicht elektrisch leitfähigen Polymers in der Heizfarbe kann 10 bis 90% (beispielsweise 20 bis 80%, 30 bis 75% oder 40 bis 60%) nach Gewicht betragen. Der Anteil des nicht elektrisch leitfähigen Polymers in der Heizschicht kann 10 bis 95% (beispielsweise 20 bis 85%, 30 bis 80% oder 40 bis 75%) nach Gewicht betragen.

Beispielhafte Gruppen von thermoplastischen Polymeren umfassen die folgenden:
- Polyolefine (wie Polypropylen, Polyethylen, Polybutylen, Polyisobutylen, etc.)
- Polyamide (wie z.B. Polyamid-66, Polyamid-12, Polyamid-11, Polyamid-6, etc.)
- Polyacryl-Polymere (wie Polymethylmethacrylat, Polyacrylnitril, Polyacrylsäure und Derivate, etc.)
- Fluorpolymere (wie Polytetrafluorethylen, Polyvinylidenfluorid, etc.)
- aliphatische und aromatische Polyester (wie z.B. Polyglykole, Polyethylenterephthalat, etc.)
- Polyimide (wie z.B. Polyetherimid)
- Poly(aryl)etherketone (wie z.B. Polyetherketone, Polyetheretherketone, etc.)
- Polysulfide (wie z.B. Polyphenylensulfid, Polyphenylensulfon, Polysulfon, Polyethersulfon, etc.)
- Polyacetale
- Cellulose und Derivate davon (wie z.B. Cellulosenitrate, -acetate, -acetatbutyrate, etc.)
- Vinylpolymere (wie z.B. Polyvinylchlorid, Polyvinylacetat, Polyvinylalkohol, Polyvinylbutyral, Polyvinylpyrrolidon, etc.)

Beispielhafte Gruppen von Elastomeren umfassen die folgenden:
- Naturkautschuke, die Chlor-, Styrol-, Nitril-, Schwefel- oder Sauerstoffsubstituenten enthalten können
- Isoprenkautschuke, die Chlor-, Styrol-, Nitril-, Schwefel- oder Sauerstoffsubstituenten enthalten können
- Butadienkautschuke, die Chlor-, Styrol-, Nitril-, Schwefel- oder Sauerstoffsubstituenten enthalten können
- andere Kautschuke, die Chlor-, Styrol-, Nitril-, Schwefel- oder Sauerstoffsubstituenten enthalten können
- Silikonelastomere
- Polyurethane

Ein Beispiel für Reaktivharze ist ein Epoxydharz, das epoxygruppenhaltige Monomere, Oligomere und/oder Polymere enthält. Epoxydharze können auf aromatischen Monomeren (z.B. auf Bisphenol-A, -F, Novolac und andere), aliphatischen Monomeren oder cycloaliphatischen Monomeren basieren. Beispiele für die letztere Gruppe beinhalten in nicht begrenzender Weise 3,4-Epoxycyclohexylmethyl-3,4-epoxycyclohexancarboxylat, Bis((3,4-epoxy-cyclohexyl)methyl)adipat und andere Derivate höheren oder auch niedrigeren Molekulargewichts. Die Epoxydharze können mono-, di-, tri-, tetra- und mehrfunktionell sein und umfassen alle Molekulargewichte.

Weitere Gruppen für Reaktivharze stellen Cyanatester und Isocyanate dar und einzelne Vertreter hiervon umfassen in nicht begrenzender Weise 2,4-Diisocyanato-1-methyl-benzol, 1-Isocyanato-4-[(4-isocyanatophenyl)methyl]benzol, 1,1-Bis(4-cyanatophenyl)ethan, 2,2-Bis(4-cyanatophenyl)propan, Oligo(3-methylen-1,5-phenylencyanat) und andere Derivate höheren oder auch niedrigeren Molekulargewichts.

Eine weitere Gruppe für Reaktivharze ist die Gruppe von linearen und verzweigten Diolen und mehrfunktionellen Alkoholen, wie Oligo- und Polyester-Polyole und Polyether-Polyole.

Eine weitere Gruppe für Reaktivharze ist die Gruppe von reaktiven Polyimidsystemen. Reaktive Polyimidsysteme können monofunktionelle Monomere (wie z.B. N-Phenylmaleimid, 2,6-Xylylmaleimid, N-Cyclohexylmaleimid, etc.) und/oder difunktionelle Monomere (wie z.B. 4,4'-Diphenylmethanbismaleimid, N,N'-(4-Methyl-m-phenylen)bismaleimid, N,N'-m-Phenylenbismaleimid, Bisphenol-A Diallylether, o,o'-Diallylbisphenol-A, Polyphenylmethanbismaleimid, Polybenzimidazol, etc.) enthalten.

Eine weitere Gruppe für Reaktivharze ist die Gruppe von Phenolharzen. Beispiele umfassen in nicht begrenzender Weise diejenigen, die aufNovolack oder Resol basieren.

Weitere beispielhafte Gruppen für Reaktivharze umfassen die folgenden:
- ungesättigte Polyester- und Vinylesterharze
- Alkydharze
- Melaminharze
- Polysilane und Silikone
- Acrylate (einschließlich Methacrylate)
- Polychinoxaline
- Peche und Bitumen

Weiterhin können Härter und/oder Beschleuniger, wie Amine, Amide, Amidoamine, Aminoalkohole, Aminosäuren, Anhydride, Imidazole, Cyanamide, Alkohole, Phenole, Polyole, Cyanate, Mercaptane, Carbonsäuren, Metallkomplexe etc., enthalten sein. Unter "Härter" wird erfindungsgemäß eine Verbindung verstanden, durch die eine Vielzahl einzelner Grundbausteine (z.B. eines Bindemittels) zu einem dreidimensionalen Netzwerk verknüpft wird. Der Härter weist vorzugsweise mindestens zwei funktionelle Gruppen auf, die fähig sind, mit einem Bindemittel zu reagieren, und gleich oder verschieden sein können. Der Anteil des Härters/Beschleunigers in der Heizfarbe bzw. Heizschicht ist vorzugsweise stöchiometrisch mit Bezug auf das jeweilige Reaktivharz (d.h. der Härter/Beschleuniger liegt in einer solchen Menge vor, dass theoretisch nahezu jedes Härter/Beschleuniger-Molekül mit einem Reaktivharz-Molekül reagieren kann; vorzugsweise beträgt die Menge an Härter/Beschleuniger 80 bis 150% (wie 85 bis 130%, 90 bis 120%, 95 bis 110%, 97 bis 105%, 98 bis 102% oder 100%) bezogen auf die molare Menge des Reaktivharzes in der Heizfarbe (bzw. Heizschicht)).

Es kann bevorzugt sein, dass die Heizfarbe keine organischen Bindemittel enthält. In diesem Fall kann die erfindungsgemäße Heizfarbe anstatt des elektrisch nicht leitenden Polymers ein oder mehrere anorganische Bindemittel umfassen. Der Begriff "anorganisches Bindemittel" betrifft erfindungsgemäß einen mineralischen Stoff, der beim Mischen mit Wasser eine insbesondere verarbeitbare Paste ergibt, die anschließend erhärtet bzw. erhärtbar ist. Vorzugsweise ist das anorganische Bindemittel im festen und/oder erhärteten Zustand elektrisch nicht leitend. Die Erhärtung kann hydraulisch (d.h. mit und unter Wasser; Beispiel: Zement, Magnesiabinder), carbonatisch (Beispiel: Kalk), hydratisch (Beispiel: Gips) oder anderweitig (z.B. polymerisch; Beispiel: Wasserglas) oder gemischt erfolgen. Beispiele für anorganische Bindemittel beinhalten in nicht begrenzender Weise Zement (wie Portlandzement, Tonerdezement (Calciumaluminate), Portlandschnellzement (Calciumsilicate, Anhydrit (CaSO₄)), Calciumsulfoaluminatzement (Ye'elimit, Belit, Anhydrit), Sulfathüttenzement (Hüttensand, Anhydrit, Calciumsilicate)), Kalk (wie Brandkalk (CaO) oder gelöschter Kalk (Ca(OH)₂)), Gips (wie Anhydrit (CaSO₄), Halbhydrat (CaSO₄·0,5 H₂O) oder Dihydrat (CaSO₄·2 H₂O)), Magnesiabinder (Magnesia, Magnesiumsalze), Wasserglas (Alkalisilicate, insbesondere Natron- und/oder Kalisilicate) und Geopolymere (z.B. Alumosilicate wie Tone). Bevorzugte Beispiele für anorganische Bindemittel sind gebrannter Kalk, gelöschter Kalk, Wasserglas, Gips, Ton und Zement. Der Anteil des anorganischen Bindemittels in der Heizfarbe kann 10 bis 90% (beispielsweise 20 bis 80%, 30 bis 75% oder 40 bis 60%) nach Gewicht betragen. Der Anteil des anorganischen Bindemittels in der Heizschicht kann 10 bis 95% (beispielsweise 20 bis 85%, 30 bis 80% oder 40 bis 75%) nach Gewicht betragen.

Die erfindungsgemäße Heizfarbe liegt vorzugsweise als flüssige Dispersion vor, wobei die festen Bestandteile (insbesondere Graphit und Ruß) in der flüssigen Phase dispergiert sind.

Vorteilhafterweise umfasst die Heizfarbe ein Dispergiermittel, insbesondere ein umweltfreundliches Dispergiermittel (wie Wasser). Bevorzugt ist die Heizfarbe im Wesentlichen frei von flüchtigen organischen Verbindungen (insbesondere im Wesentlichen frei von leicht flüchtigen organischen Lösungsmitteln). Der Begriff "flüssig" soll hierbei insbesondere im physikalischen Sinne verstanden werden, so dass auch viskose und/oder nichtnewtonsche Flüssigkeiten inbegriffen sind. Der Ausdruck "im Wesentlichen frei von flüchtigen organischen Verbindungen" bedeutet erfindungsgemäß, dass ein Gemisch (z.B. die erfindungsgemäße Heizfarbe oder die daraus erzeugbare Heizschicht) derart frei von flüchtigen organischen Verbindungen sein soll, wie es praktisch und realistisch machbar ist. Beispielsweise kann, wenn das Gemisch im Wesentlichen frei von flüchtigen organischen Verbindungen ist, die Menge an flüchtigen organischen Verbindungen in dem Gemisch weniger als 1 Gew.-%, (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht des Gemisches, betragen.

In einer Ausführungsform weist die erfindungsgemäße Heizfarbe ein oder mehrere Zusatzstoffe auf, die vorzugsweise aus der Gruppe ausgewählt sind, die aus Dispergiermitteln, Netzmitteln, Rheologieadditiven, Korrosionsschutzmitteln, Mitteln zum Erhöhen der Kratzfestigkeit und Bioziden besteht.

Die Herstellung einiger möglicher Heizfarben wird im Folgenden beschrieben: Beispielsweise können die Feststoffe mit einem Netzmittel benetzt werden, um eine Pigmentpaste herzustellen. Das Bindemittel wird mit den weiteren Zusatzstoffen (falls vorhanden) vermischt und dieses Gemisch wird mit der Pigmentpaste vermischt. In einem alternativen Herstellungsverfahren werden alle flüssigen Bestandteile gemischt und die Feststoffe werden nach und nach unter Scherung hinzugegeben.

### Flächenheizvorrichtung

### Heizschicht

Eine in der erfindungsgemäßen Flächenheizvorrichtung enthaltene Komponente ist die im zweiten erfindungsgemäßen Aspekt definierte Heizschicht. Als Heizschicht im Sinne der vorliegenden Erfindung wird ein folienartiger Gegenstand bezeichnet, der auf einem Bereich einer Wand eines Raumes aufbringbar oder erzeugbar ist (unter Verwendung der erfindungsgemäßen Heizfarbe) und in dem Wärme erzeugbar ist und von dem Wärme abgegeben werden kann. Die Wärme ist bei der Heizschicht durch Strombeaufschlagung erzeugbar. Hierzu sind in der Heizschicht Leitfähigkeitsadditive vorgesehen. Die Heizschicht ist aufgrund des Vorhandenseins der Leitfähigkeitsadditive Graphit und Ruß niederohmig, was zu einer guten elektrischen Leitfähigkeit führt, da nur ein geringer elektrischer Widerstand vorhanden ist. Dadurch kann eine homogene Beheizbarkeit realisiert werden. Durch die Niederohmigkeit ist zudem gewährleistet, dass an die Heizschicht nur geringe Spannungen und/oder geringe Ströme angelegt werden müssen, um eine gute Beheizung zu erreichen.

Die Randbereiche der Heizschicht stellen insbesondere seitliche Randbereiche der Breite der Heizschicht dar. Als Breite wird in diesem Zusammenhang vorzugsweise eine Abmessung bezeichnet, die zu der Hauptausdehnungsrichtung, insbesondere Länge, der Heizschicht quer liegt. Die Randbereiche erstrecken sich jeweils von dem seitlichen Rand der Heizschicht und enden in einem Abstand zu der Mittellinie der Heizschicht, die in der Hauptausdehnungsrichtung liegt. Die Hauptausdehnungsrichtung kann hierbei eine Gerade oder eine Kurve sein. Die Kontaktelemente erstrecken sich somit nicht über die Mittellinie und enden vorzugsweise in einem Abstand zu der Mittellinie, wobei der Abstand vorteilhafterweise mindestens das 4-Fache (wie mindestens das 5-Fache, mindestens das 6-Fache, mindestens das 7-Fache oder mindestens das 8-Fache) der Breite eines Kontaktelements ist.

Gemäß einer bevorzugten Ausführungsform weist die Heizschicht ein Breiten-zu-Längen-Verhältnis von kleiner gleich 1 auf. Bei dieser Ausführungsform weist die Heizschicht somit eine Band- oder Streifenform auf. Die Kontaktelemente befinden sich hierbei an den seitlichen Randbereichen, das heißt, sie erstrecken sich in Längsrichtung der bandförmigen Schicht. Die Ausführungsform der Heizschicht mit einem kleinen Breiten-Längen-Verhältnis weist den Vorteil auf, dass zum einen der Abstand zwischen den Kontaktelementen verhältnismäßig gering ist und damit eine zuverlässige Erwärmung der Heizschicht über die Breite gewährleistet werden kann. Vorteilhafterweise kann der Abstand zwischen den Innenkanten der Kontaktelemente bis zu 2 m, vorzugsweise bis zu 1 m, wie 50 bis 80 cm, vorzugsweise 60 bis 75 cm, mehr bevorzugt 65 bis 70 cm betragen.

In einer Ausführungsform der erfindungsgemäßen Flächenheizvorrichtung weist die Heizschicht die Form eines Rechtecks oder Parallelogramms auf. Die Fläche der Heizschicht ist nicht begrenzt. Sie kann beispielsweise bis zu 100 m², vorzugsweise bis zu 20 m², mehr bevorzugt bis zu 10 m², wie 1 dm² bis 50 m², mehr bevorzugt 0,1 m² bis 10 m², mehr bevorzugt 0,5 m² bis 8 m², mehr bevorzugt 0,6 m² bis 6 m², mehr bevorzugt 0,7 m² bis 4 m², mehr bevorzugt 0,8 m² bis 2 m², mehr bevorzugt 0,90 bis 1,10 m², vorzugsweise 0,95 bis 1,05 m² betragen.

Die Schichtdicke der Heizschicht wird vorzugsweise gering gewählt und liegt beispielsweise im µm-Bereich (z.B. im Bereich von 40 bis 200 µm, bevorzugt 50 bis 100 µm). Beispielsweise kann eine Schichtdicke der Heizschicht von weniger als 100 µm ausreichen, um die gewünschte Heizwirkung zu erlangen.

Die erfindungsgemäße Flächenheizvorrichtung kann mehr als eine Heizschicht (z.B. mindestens 2, mindestens 3 oder mindestens 4 voneinander getrennte Heizschichten) umfassen, wobei für jede Heizschicht zwei elektrisch leitfähige Kontaktelemente, zwei elektrische Leitungen und zwei Übergangselemente vorhanden sind, jedoch alle Heizschichten an dem gleichen Steuerungselement angeschlossen sein können. Die Fläche der einzelnen Heizschichten kann gleich oder verschieden sein und kann jeweils im vorstehend angegeben Bereich (beispielsweise 0,1 bis 10 m², wie 0,90 bis 1,10 m², vorzugsweise 0,95 bis 1,05 m²) liegen.

Die Wärmemenge, die von der Heizschicht abgegeben wird, kann unter anderem durch die Leistungsparameter des Spannungsquelle (Strommenge, die durch die Heizschicht fließt, bzw. Spannung, die an der Heizschicht anliegt; beides kann durch die Steuerungsvorrichtung gesteuert werden), durch Einstellen der Dicke der Heizschicht und/oder durch die Konzentration der Leitfähigkeitsadditive in der Heizschicht variiert werden.

Die erfindungsgemäße Heizschicht kann mit Wechselspannung oder Gleichspannung betrieben werden. Die erfindungsgemäße Heizschicht kann mit Niederspannung versorgt werden und dennoch eine ausreichende Heizwirkung realisieren. Die Heizschicht kann bei einer Versorgung ab Spannungswerten von größer 0 V, bevorzugt mit einer Schutzkleinspannung (Wechsel- oder Gleichspannung), insbesondere im Bereich von 5 V bis 48 V, (wie im Bereich von 18 bis 25 V, beispielsweise 22 V) betrieben werden.

Die Heizschicht kann auf einer Wand in an sich bekannter Weise unter Verwendung der erfindungsgemäßen Heizfarbe erzeugt werden. Z.B. kann die Heizfarbe durch Rollen, Sprühen, Streichen, Pinseln, Rakeln, Spachteln oder Drucken auf die Wand aufgetragen werden, wobei Sprühen, Rollen, Rakeln oder Drucken erfindungsgemäß bevorzugt ist. Der Auftrag der Heizfarbe kann in einem Schritt (d.h. in nur einem Anstrich) oder in zwei oder mehreren Schritten (d.h. in 2 oder mehreren Anstrichen) erfolgen, wobei im letzteren Fall zwischen den einzelnen Auftragungen jeweils ein Trocknungsschritt liegen sollte. Vorzugsweise ist die Heizschicht mittels Rollen in zwei Anstrichen (mit einem Trocknungsschritt dazwischen) oder mittels Aufsprühen in einem Anstrich erzeugbar.

Gegebenenfalls kann vor dem Auftragen der Heizschicht eine Grundierschicht auf der zu beheizenden Wand erzeugt werden. Dies ist insbesondere vorteilhaft, um die Saugfähigkeit der zu beheizenden Wand zu verringern und/oder eine gleichbleibende Oberflächenqualität der zu beheizenden Wand sicherzustellen.

### Kontaktelemente

Die in der erfindungsgemäßen Flächenheizungsvorrichtung enthaltenen zwei elektrisch leitfähigen Kontaktelemente (insbesondere für jede in der erfindungsgemäßen Flächenheizvorrichtung enthaltenen Heizschicht) dienen der Beaufschlagung der Heizschicht mit elektrischer Spannung und/oder elektrischem Strom. Die Kontaktelemente können insbesondere Kontaktstreifen oder Kontaktbänder darstellen.

In einer Ausführungsform der erfindungsgemäßen Flächenheizvorrichtung umfassen die zwei elektrisch leitfähigen Kontaktelemente elektrisch leitfähige Metallstreifen, insbesondere elektrisch leitfähige Kupferstreifen. Vorteilhafterweise weist jedes Kontaktelement eine Klebschicht auf. Die Gesamtdicke jedes Kontaktelements (inkl. Klebschicht, falls vorhanden) kann vorzugsweise maximal 100 µm, mehr bevorzugt maximal 90 µm, mehr bevorzugt maximal 80 µm, mehr bevorzugt maximal 75 µm betragen.

Die Kontaktelemente können in einer Ausführungsform als gerade Streifen ausgebildet sein. Allerdings ist die Form der Kontaktelemente auch für weitere Ausführungsformen nicht auf eine solche gerade Konfiguration beschränkt. Die Kontaktelemente können beispielsweise durch Streifen gebildet werden, die in der Hautausdehnungsrichtung der Heizschicht kurvenförmig verläuft.

In einer Ausführungsform der erfindungsgemäßen Flächenheizvorrichtung sind die zwei elektrisch leitfähigen Kontaktelemente an sich gegenüberliegenden Randbereichen der Heizschicht (z.B. der obere und untere Randbereich oder der linke und rechte Randbereich) anordbar oder angeordnet.

In einer Ausführungsform der erfindungsgemäßen Flächenheizvorrichtung sind die zwei elektrisch leitfähigen Kontaktelemente parallel zueinander angeordnet oder anordbar. Vorteilhafterweise kann der Abstand zwischen den Innenkanten der Kontaktelemente bis zu 2 m, vorzugsweise bis zu 1 m, wie 50 bis 80 cm, vorzugsweise 60 bis 75 cm, mehr bevorzugt 65 bis 70 cm betragen.

Die Breite der Kontaktelemente ist nicht kritisch. Jedoch sollten die Kontaktelemente derart dimensioniert sein, dass sie eine Beaufschlagung der Heizschicht mit elektrischer Spannung und/oder elektrischem Strom, vorzugsweise über die gesamte Länge und/oder Breite der Heizschicht erlauben. Beispielsweise kann die Breite der Kontaktelemente in Bezug zur Breite der Heizschicht ausgewählt werden. Eine geeignete Breite der Kontaktelemente kann im Bereich von 1/10 bis 1/40 (vorzugsweise 1/12 bis 1/32, wie 1/16 bis 1/24, wie ein 1/20) der Breite der Heizschicht betragen. Die absolute Breite der Kontaktelemente kann im Bereich von 2 bis 8 cm (vorzugsweise 2,5 bis 6,5 cm, wie 3,5 bis 5 cm oder 4 cm) liegen, wobei die Summe der Breiten der Kontaktelemente maximal die Hälfte der Breite der Heizschicht betragen sollte.

Die elektrisch leitenden Kontaktelemente erstrecken sich vorzugsweise über die gesamte Länge der Heizschicht. Dies weist den Vorteil auf, dass die Heizschicht auf ihrer gesamten Länge über ihre Breite von Strom durchflossen werden kann und damit die zu beheizende Fläche maximiert wird. Vorteilhafterweise können sich die Kontaktelemente über ein Längsende der Heizschicht hinaus erstrecken, das heißt über ein Längsende überstehen. Dies trägt ebenfalls zur Maximierung der zu beheizenden Fläche bei, da kein Abschnitt der Kontaktelemente, der im direkten Kontakt mit der Heizschicht steht, sondern lediglich der überstehende Rest der Kontaktelemente, der nicht im direkten Kontakt mit der Heizschicht steht, dazu verwendet werden kann bzw. verwendbar ist, um eine elektrisch leitende Verbindung (via Übergangselement und elektrischer Leitung) mit der Spannungsquelle sicherzustellen.

Die Kontaktelemente können auf jegliche bekannte Weise auf der Wand angebracht werden, z.B. mittels Aufkleben, thermischen Spritzen (wie Lichtbogenspritzen) oder Plasmaspritzen. Für eine einfache Handhabung und Herstellung der Flächenheizvorrichtung ist jedoch ein Aufkleben der Kontaktelemente auf der zu beheizenden Wand bevorzugt. Für diese Ausführungsform weisen die Kontaktelemente vorzugsweise eine Klebschicht auf.

Die Kontaktelemente können nach der Erzeugung der Heizschicht auf der zu beheizenden Wand (wobei auf der Wand gegebenenfalls zuvor eine Grundierschicht erzeugt wurde) auf diese Heizschicht aufgebracht werden. In diesem Fall ist es bevorzugt, dass die Aufbringung der Kontaktelemente unter Verwendung geeigneter Mittel erfolgt, die einen, insbesondere ungehinderten, Stromfluss zwischen den Kontaktelementen und der Heizschicht erlauben. Dies kann z.B. dadurch erreicht werden, dass in der Ausführungsform, in der die Kontaktelemente eine Klebschicht umfassen, diese Klebschicht elektrisch leitend ist.

Alternativ können die Kontaktelemente vor Erzeugung der Heizschicht auf der zu beheizenden Wand aufgebracht werden (gegebenenfalls kann zuvor eine Grundierschicht auf der zu beheizenden Wand erzeugt werden). In diesem Fall ist es bevorzugt, dass die Heizfarbe (evtl. zunächst nur) auf die Kontaktelemente aufgetragen wird, beispielsweise um die Auftragung von weiteren Schichten der Heizfarbe auf die Kontaktelemente und die zu beheizende Wand (zur Erzeugung der Heizschicht) und/oder den Stromfluss zwischen den Kontaktelementen und der Heizschicht zu verbessern. Vorzugsweise wird die Heizfarbe nicht nur zwischen und auf den Kontaktelementen (die wie vorstehend beschrieben mit der Heizfarbe vorgestrichen sein können) aufgetragen, sondern auch über die andere Längsseite der Kontaktelemente hinaus (d.h. über diejenigen Längsseiten der Kontaktelemente hinaus, die nicht den Zwischenraum zwischen den Kontaktelementen definieren) und/oder über die Breitseite der Kontaktelemente, die nicht mit dem Übergangselement verbunden ist, hinaus auf die zu beheizende Wand (oder die zuvor grundierte zu beheizende Wand). Dies führt dazu, dass die Kontaktelemente längsseits und/oder an der Breitseite der Kontaktelemente, die nicht mit dem Übergangselement verbunden ist, vollständig von der Heizschicht umschlossen sind. Lediglich der Abschnitt der Kontaktelemente, der unmittelbar mit den Übergangselementen verbunden oder verbindbar ist, ist dann nicht von der Heizschicht bedeckt. Vor der ersten Auftragung der Heizfarbe auf die Kontaktelemente kann es vorteilhaft sein, die Kontaktelemente zu entfetten, um die Anhaftung der Heizschicht an die Kontaktelemente zu verbessern.

### Übergangselemente

An den Kontaktelementen sind zudem Übergangselemente vorgesehen, über die eine Stromzuleitung zu den Kontaktelementen erfolgen kann und die jeweils mindestens ein Halteelement aufweisen, über das das Übergangselement an der Wand in einem Bereich der zu beheizenden Wand, auf dem keine Heizschicht und keine Kontaktelement aufgebracht ist, kraft- und/oder formschlüssig befestigbar ist. Dies sorgt für eine mechanische Zugentlastung. Insbesondere ist dadurch verhinderbar, dass durch ein (versehentliches) Ziehen an einer der zwei elektrischen Leitungen das entsprechende Kontaktelement von der Wand abgelöst wird. Beispiele von entsprechenden Halteelementen für eine kraft- und/oder formschlüssige Befestigung beinhalten eine oder mehrere (z.B. 2) Verschraubungen (vorzugsweise inkl. einer oder mehrerer entsprechend geformter Aussparungen in dem Übergangselement), durch die das Übergangselement an die Wand, allein oder mittels entsprechender zusätzlicher Mittel (z.B. Dübel), geschraubt wird bzw. anbringbar ist, ein formschlüssiger Körper (z.B. in Schmetterlingsform), der in eine entsprechend geformte Aussparung in der zu beheizbaren Wand formschlüssig passt (evtl. auch unter Putz), oder ein Bajonett-Verschluss.

Jedes der Übergangselemente ist vorzugsweise mit einem der Pole der Spannungsquelle über eine elektrische Leitung verbunden, wobei diese Verbindung vorteilhafterweise lösbar ausgestaltet ist (beispielweise mittels einer Steckverbindung). Jedes der Übergangselemente ist mit einem der zwei Kontaktelemente, insbesondere elektrisch leitend, verbunden, z.B. mittels einer Klemmverbindung, wobei diese Verbindung zwischen dem Übergangselement und dem Kontaktelement lösbar ausgestaltet sein kann.

Die Übergangselemente sind vorteilhafterweise derart dimensioniert, dass sie die Kontaktelemente in ihrer vollen Breite aufnehmen können.

### Steuerungselement

Das gegebenenfalls in der erfindungsgemäßen Flächenheizvorrichtung enthaltene Steuerungselement umfasst eine Spannungsquelle (zur Bereitstellung von elektrischer Spannung und/oder elektrischem Strom) und eine Steuerungsvorrichtung zum Steuern der Flächenheizvorrichtung.

Der Begriff "Spannungsquelle" soll erfindungsgemäß eine jegliche elektrische Energiequelle umfassen, die geeignet ist, eine elektrische Spannung und/oder einen elektrischen Strom bereitzustellen. In einer Ausführungsform ist die Spannungsquelle ein Netzteil, d.h. ein Gerät oder eine Baugruppe, das/die an das Hausstromnetz (typischerweise 230 V AC ± 10%, 50/60 Hz) angeschlossen werden kann und andere Geräte oder Baugruppen, die andere Spannungen und/oder Ströme benötigen, als vom Hausstromnetz bereitgestellt wird, mit Energie versorgt. Das Netzteil kann ein Schalt- oder Trafonetzteil sein. In einer Ausführungsform stellt die Spannungsquelle eine Wechselspannung (insbesondere im Schutzkleinspannungsbereich) bereit oder ist derart konfiguriert und ausgestaltet, eine Wechselspannung (insbesondere im Schutzkleinspannungsbereich) bereitzustellen. In einer alternativen Ausführungsform stellt die Spannungsquelle eine Gleichspannung (insbesondere im Schutzkleinspannungsbereich) bereit oder ist derart konfiguriert und ausgestaltet, eine Gleichspannung (insbesondere im Schutzkleinspannungsbereich) bereitzustellen.

In einer Ausführungsform ist die Spannungsquelle derart ausgelegt und konfiguriert, mehr als eine (z.B. mindestens 2, mindestens 3 oder mindestens 4) Heizschichten mit Spannung (und/oder elektrischem Strom) gleichzeitig versorgen zu können.

Die Steuerungsvorrichtung ist vorzugsweise derart konfiguriert und ausgestaltet, die erfindungsgemäße Flächenheizvorrichtung zu steuern, d.h. zu steuern, mit welcher elektrischen Spannung und/oder welchem elektrischen Strom die Heizschicht (oder Heizschichten) beaufschlagt wird (werden), um die gewünschte Temperatur zu erreichen.

Hierzu ist es zweckmäßig, dass in einer Ausführungsform das Steuerungselement einen Thermostat aufweist, der insbesondere derart konfiguriert und ausgestaltet ist, die Temperatur des Raumes, in dem sich die erfindungsgemäße Flächenheizvorrichtung befindet, messen und gegebenenfalls überwachen zu können. Zweckmäßig ist der Thermostat derart konfiguriert und ausgestaltet, mit der Steuerungsvorrichtung kommunizieren zu können. Vorteilhafterweise ist der Thermostat in dem Raum, in dem sich die erfindungsgemäße Flächenheizvorrichtung befindet, angebracht, jedoch vorzugsweise nicht direkt neben einer Heizschicht der erfindungsgemäßen Flächenheizvorrichtung, sondern eher an einer Wand, auf der keine Heizschicht aufgebracht ist (beispielsweise kann sich der Thermostat an einer Wand des Raumes mit der erfindungsgemäßen Flächenheizvorrichtung befinden, die der Wand gegenüberliegt, an die die Heizschicht angebracht ist). In einer Ausführungsform ist der Thermostat derart konfiguriert und ausgestaltet, dass an ihm die gewünschte Raumtemperatur (Solltemperatur) einstellbar ist.

In einer Ausführungsform misst die Steuerungsvorrichtung im Betrieb fortwährend den elektrischen Strom, der durch die Heizschicht (oder Heizschichten) fließt, und vergleicht diesen mit einem Normalwert/Referenzwert. Dadurch kann sichergestellt werden, dass Fehlfunktionen der Heizschicht (z.B. Funkenbildung auf der Heizschicht) oder mechanische Änderungen an der zu beheizenden Wand nicht zu einer unsicheren Situation bzw. Gefährdung von Personen und/oder Tieren führen.

Beispielsweise weist in einer Ausführungsform der erfindungsgemäßen Flächenheizvorrichtung das Steuerungselement eine Abschaltautomatik der Spannungsquelle auf. Hierzu kann das Steuerungselement derart konfiguriert und ausgestaltetet sein, dass es die Entstehung von Funken auf der Heizschicht erkennt und bei Auftreten derartiger Funken die Abschaltautomatik aktiviert, d.h. die Spannungsquelle abschaltet. Alternativ oder zusätzlich ist das Steuerungselement derart konfiguriert und ausgestaltetet, dass es überwacht, welche Strommenge durch die Heizschicht fließt, und bei einer Abweichung von mindestens 1% (wie mindestens 5% oder mindestens 10%) des durch die Heizschicht fließenden Stroms vom Normalwert/Referenzwert die Abschaltautomatik aktiviert, d.h. die Spannungsquelle abschaltet.

In einer Ausführungsform der erfindungsgemäßen Flächenheizvorrichtung weist das Steuerungselement einen Temperatursensor auf der Heizschicht auf. Der Temperatursensor ist vorteilhafterweise derart ausgestaltet und konfiguriert, die Temperatur unmittelbar auf oder über der Heizschicht (falls weitere Schichten über der Heizschicht aufgetragen wurden) zu messen und die Messdaten an den Thermostat und/oder die Steuerungsvorrichtung weiterzuleiten. Dadurch ist eine Gefährdung durch eine übermäßig heiße Flächenheizvorrichtung (z.B. mit einer Temperatur an der Oberfläche der Heizschicht von über 40°C (insbesondere falls die Heizschicht an einem Bereich einer Wand angebracht ist, der für Personen erreichbar ist) oder mit einer Temperatur an der Oberfläche der Heizschicht von über 70°C oder über 120°C (insbesondere falls die Heizschicht an einem Bereich einer Wand angebracht ist, der für Personen nicht erreichbar ist)) verhinderbar.

Das Steuerungselement kann in dem Raum, der die zu beheizende Wand beinhaltet, angebracht sein. In einer alternativen Ausführungsform kann sich das Steuerungselement an einem anderen Ort (z.B. in einem Nebenraum, in einem zentralen Schalt- oder Sicherungsraum, an den der zu beheizende Raum angeschlossen ist, oder in einem Keller) befinden.

Zum Schutz der erfindungsgemäßen Flächenheizvorrichtung und/oder zum Ausgleich von Unebenheiten kann eine Schutz- bzw. Ausgleichsschicht auf einen Teil der Heizschicht (z.B. nur in den Bereichen der Heizschicht, die unmittelbar mit den Kontaktelementen in Verbindung stehen, da dort die Heizschicht dünner sein kann) oder auf der kompletten Heizschicht und/oder auf exponierte (d.h. überstehende) Bereiche der Kontaktelemente aufgetragen werden oder auftragbar sein. Die Schutz- bzw. Ausgleichsschicht kann in einer Ausführungsform die Heizschicht elektrisch zum Raum hin isolieren. Die Schutz- bzw. Ausgleichsschicht kann in an sich bekannter Weise erzeugt werden. Beispiele für eine solche Schutz- bzw. Ausgleichsschicht sind eine Schicht aus Spachtelmasse, eine Schicht aus Sperrgrund, ein Vliesband, das in einer Ausführungsform aufklebbar ist, oder eine Kombination davon. Vorteilhafterweise ist die Schutz- bzw. Ausgleichsschicht thermisch leitend, gegebenenfalls auch elektrisch isolierend.

Weiterhin kann eine weitere Farbschicht als oberste Schicht aufgetragen werden oder sein, die vorteilhafterweise thermisch leitend ist.

Die erfindungsgemäße Flächenheizvorrichtung kann dazu verwendet werden, Temperaturen zu erzeugen, die üblicherweise im Inneren eines Hauses (wie eines Wohnhauses) vorgefunden werden, beispielweise eine Temperatur im Bereich von 15 bis 30°C. Dabei kann die maximale Oberflächentemperatur der Heizschicht bis zu 40°C betragen, insbesondere wenn die Heizschicht an einem Bereich einer Wand angebracht ist, der für Personen erreichbar ist (typischerweise in einem Bereich der Wand, der einen Abstand vom Boden von weniger als 2,5 m aufweist). Wenn die Heizschicht an einem Bereich einer Wand angebracht ist, der für Personen nicht erreichbar ist (typischerweise in einem Bereich der Wand, der mindestens einen Abstand von 2,5 m vom Boden aufweist, z.B. an einer Decke oder an einer entsprechenden Schräge eines Raumes), kann die maximale Oberflächentemperatur der Heizschicht bis zu 120°C (wie bis zu 110°C, bis zu 100°C, bis zu 90°C, bis zu 80°C oder bis zu 70°C) betragen. In einer Ausführungsform ist auch vorgesehen, die erfindungsgemäße Flächenheizvorrichtung dazu zu verwenden, höhere als übliche Raumtemperaturen zu erreichen, beispielsweise Temperaturen, die in einer Sauna vorgefunden werden (z.B. 80°C bis 120°C, wie 85°C bis 110°C).

Die erfindungsgemäße Flächenheizvorrichtung ist insbesondere dazu geeignet ist, einen Raum zu beheizen, wobei es nicht darauf ankommt, wie der Raum ausgestattet ist oder wo er sich befindet. Z.B. kann der Raum ein Teil eines Hauses oder Gebäudes (d.h. immobil) sein; der Begriff "Raum" schließt aber auch mobile Varianten (wie Container) ein. Der Begriff "Wand" schließt erfindungsgemäß jegliche Begrenzung eines Raumes ein, wobei Fenster ausgeschlossen sind. Der Begriff "Wand" umfasst insbesondere neben den vertikalen Wänden (tragend oder nicht tragend) auch eventuell vorhandene Trennwände, eventuell vorhandene Schrägen und Decken des Raumes (einschließlich Abhängdecke).

Die erfindungsgemäße Flächenheizvorrichtung weist den Vorteil auf, dass sie zum Beheizen von Räumen verwendet werden kann, in denen die Raumluft möglichst wenig bewegt werden soll (z.B. Patientenzimmer oder Operationssäle von Krankenhäusern, Zimmer von Allergikern, etc.). Ein weiterer Vorteil besteht darin, dass die erfindungsgemäße Flächenheizvorrichtung direkt an einer Wand aufgebracht ist und bei Betrieb der Flächenheizvorrichtung die Temperatur dieser Wand über der Raumtemperatur liegt. Folglich wird Wasser, das sich an (oder in) dieser Wand befindet, eher verdunsten (im Gegensatz zu herkömmlichen Systemen, bei denen Wasser eher an den Wänden kondensiert), was insgesamt einer Schimmelbildung vorbeugt. Ein weiterer Vorteil liegt darin, dass mittels der erfindungsgemäßen Flächenheizvorrichtung (insbesondere deren Heizschicht) elektromagnetische Strahlung abschirmbar ist. Um diese Abschirmung zu erreichen, wird die Heizschicht nicht mit elektrischen Strom oder elektrischer Spannung beaufschlagt, sondern auf Erdung gelegt.

### Kit zum Herstellen einer Flächenheizvorrichtung

Hinsichtlich der Ausgestaltungen der Komponenten des erfindungsgemäßen Kits wird vollinhaltlich auf die vorstehenden Ausführungen bezüglich des ersten (Heizfarbe) und zweiten (Flächenheizvorrichtung) erfindungsgemäßen Aspekts Bezug genommen.

Insbesondere ist die im erfindungsgemäßen Kit enthaltene Heizfarbe eine Heizfarbe gemäß dem vorstehend beschriebenen ersten erfindungsgemäßen Aspekts.

Weiterhin kann in einer Ausführungsform des erfindungsgemäßen Kits das Steuerungselement eine Abschaltautomatik der Spannungsquelle und/oder einen Thermostat aufweisen, wie es hierin für die erfindungsgemäße Flächenheizvorrichtung des zweiten Aspekts beschrieben ist.

In einer Ausführungsform des erfindungsgemäßen Kits umfassen die zwei elektrisch leitfähigen Kontaktelemente elektrisch leitfähige Metallstreifen, insbesondere elektrisch leitfähige Kupferstreifen. Vorteilhafterweise weist jedes Kontaktelement eine Klebschicht auf. Die Gesamtdicke der Kontaktelemente beträgt vorzugsweise maximal 100 µm, mehr bevorzugt maximal 90 µm, mehr bevorzugt maximal 80 µm, mehr bevorzugt maximal 75 µm.

### Verwendungen und Verfahren

Die erfindungsgemäße Heizfarbe und das erfindungsgemäße Kit können zur Herstellung einer Flächenheizvorrichtung, insbesondere einer erfindungsgemäßen Flächenheizvorrichtung, an einer Wand verwendet werden. Die erfindungsgemäße Flächenheizvorrichtung bietet neben ihrer Verwendung zum Beheizen eines Raumes auch den Vorteil, dass sie zum Abschirmen von elektromagnetischer Strahlung verwendet werden kann. Hierzu wird lediglich die Heizschicht nicht mit elektrischen Strom oder elektrischer Spannung beaufschlagt, sondern auf Erdung gelegt.

Hinsichtlich der Ausgestaltungen des erfindungsgemäßen Verfahrens zum Beheizen eines Raumes wird vollinhaltlich auf die vorstehenden Ausführungen bezüglich des ersten (Heizfarbe) und zweiten (Flächenheizvorrichtung) erfindungsgemäßen Aspekts Bezug genommen.

Insbesondere kann das Auftragen der Heizfarbe und/oder das Anbringen der Kontaktelemente sowie das optionale Auftragen weiterer Schichten (wie einer Grundierschicht und/oder Schutz- bzw. Ausgleichsschicht und/oder Farbschicht) wie im Zusammenhang mit der erfindungsgemäßen Flächenheizvorrichtung beschrieben erfolgen.

In einer bevorzugten Ausführungsform der erfindungsgemäßen Verfahren erfolgt das Anbringen von zwei Kontaktelementen für jede der mindestens einen Heizschicht an der zu beheizenden Wand vor dem Schritt eines Auftragen der Heizfarbe und das Auftragen der Heizfarbe umfasst ein Auftragen der Heizfarbe zumindest zwischen und auf den Kontaktelemente, wobei vorzugsweise lediglich der Abschnitt der Kontaktelemente, der unmittelbar mit den Übergangselementen verbunden oder verbindbar ist, von der Heizfarbe unbedeckt verbleibt.

In einer bevorzugten Ausführungsform der erfindungsgemäßen Verfahren erfolgt das Auftragen der Heizfarbe mittels Rollen, Sprühen, Streichen, Pinseln, Rakeln, Spachteln, Drucken oder einer Kombination davon.

Nachstehend werden unter Bezugnahme auf die beigefügten Figuren einige bevorzugte Ausführungsbeispiele beschrieben, die allerdings nicht begrenzend für die Erfindung sind und lediglich als beispielhafte Ausführungsformen der Erfindung verstanden werden sollen. Die Elemente der Figuren sind nicht notwendigerweise maßstabsgetreu zueinander gezeigt. Sofern nicht anders angegeben werden in den Figuren gleiche, funktionsgleiche und gleich wirkende Elemente jeweils mit denselben Bezugszeichen bezeichnet.

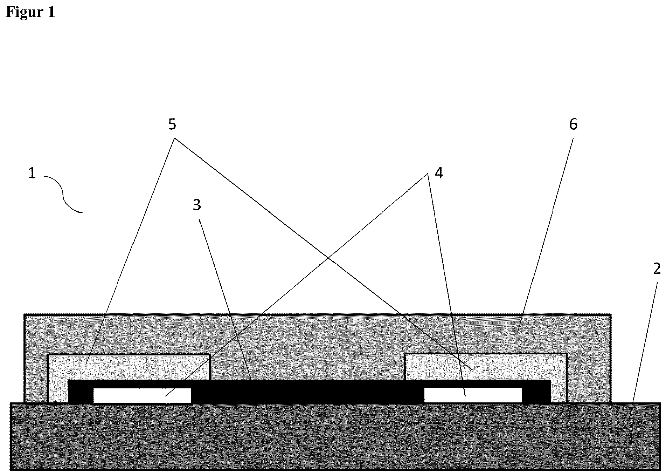

In Figur 1 ist eine schematische, nicht maßstabsgetreue Schnittansicht der erfindungsgemäßen Flächenheizvorrichtung (1), wie sie an einer (eventuell bereits grundierten) zu beheizenden Wand (2) angebracht ist, gezeigt. Diese Ausführungsform kann dadurch hergestellt werden, dass zunächst die beiden Kontaktelemente (4) (z.B. Kupferbänder) auf der (eventuell bereits grundierten) zu beheizenden Wand angebracht werden (beispielweise mittels einer Klebschicht (nicht gezeigt)). Danach wird die Heizschicht (3) unter Verwendung der erfindungsgemäßen Heizfarbe erzeugt, wobei die Heizfarbe nicht nur zwischen und auf den Kontaktelementen (4) (die vorzugsweise mit der Heizfarbe vorgestrichen sind) aufgetragen wird, sondern auch über die andere Längsseite der Kontaktelemente (4) hinaus (d.h. über diejenigen Längsseiten der Kontaktelemente (4) hinaus, die nicht den Zwischenraum zwischen den Kontaktelementen (4) aufbauen) auf die (eventuell bereits grundierten) zu beheizende Wand (2). Dies führt dazu, dass die Kontaktelemente (4) längsseits vollständig von der Heizschicht (3) umschlossen sind. Vorzugsweise (nicht in Figur 1 gezeigt) erfolgt die Auftragung der Heizfarbe auf die (eventuell bereits grundierten) zu beheizende Wand (2) auch über die Breitseite der Kontaktelemente (4), die nicht mit dem Übergangselement (7) verbunden ist, hinaus. Dies führt dazu, dass die Kontaktelemente (4) auch an der Breitseite der Kontaktelemente (4), die nicht mit dem Übergangselement (7) verbunden ist, vollständig von der Heizschicht (3) umschlossen sind.

Weiterhin weist die in Figur 1 gezeigte Flächenheizvorrichtung (1) eine Schutz- bzw. Ausgleichsschicht (5) sowie eine abschließende Farbschicht (6) auf. In der Ausführungsform, die in Figur 1 gezeigt ist, umschließt die Schutz-/Ausgleichsschicht (5) nicht vollständig die Heizschicht (3). In einer alternativen Ausführungsform (nicht gezeigt) kann die Schutz-/Ausgleichsschicht (5) die Heizschicht (3) vollständig umschließen.

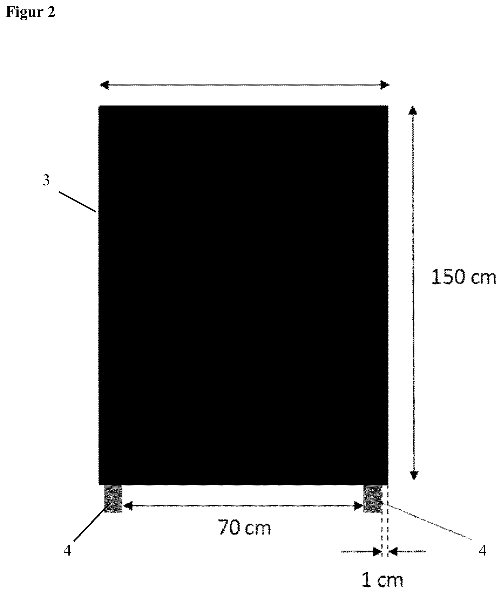

Figur 2 zeigt eine Draufsicht der erfindungsgemäßen Flächenheizvorrichtung (1), wobei lediglich die Heizschicht (3) sowie die überstehenden Teile der Kontaktelemente (4) zu sehen sind, und gibt beispielhafte Dimensionen für die gezeigten Komponenten der erfindungsgemäßen Flächenheizvorrichtung (1) an. In der in Figur 2 gezeigten Ausführungsform umschließt die Heizschicht (3) vollständig die Kontaktelemente (4) längsseits und an der Breitseite der Kontaktelemente, die nicht mit dem Übergangselement verbunden oder verbindbar ist. Lediglich der untere Abschnitt der Kontaktelemente (4), der unmittelbar mit den Übergangselementen verbunden oder verbindbar ist, ist nicht von der Heizschicht bedeckt und kann verwendet werden, um daran die Übergangselemente anzuschließen.

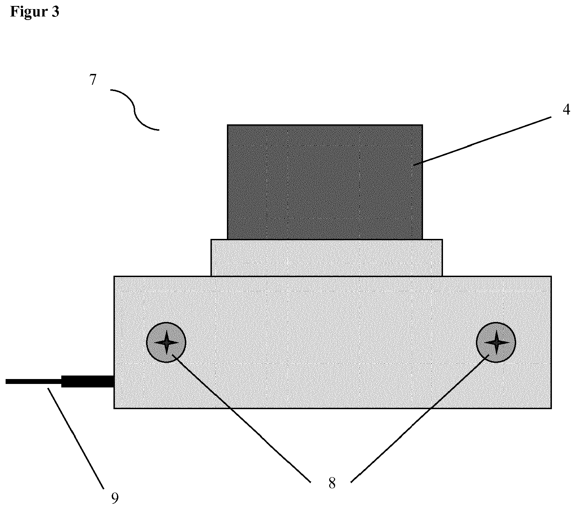

Figur 3 zeigt eine schematische Draufsicht einer Ausführungsform des Übergangselements (7), das elektrisch mit dem Kontaktelement (4) und der elektrischen Leitung (9) verbunden ist und zwei Halteelemente (8) in der Form von Schrauben aufweist. In dieser Ausführungsform können die Halteelemente (8) allein oder mittels entsprechender zusätzlicher Mittel (z.B. Dübel) in der zu beheizenden Wand kraftschlüssig befestigt werden. Die Verbindung zwischen dem Übergangselement (7) und der elektrischen Leitung (9) ist lösbar ausgestaltet (in der Form einer Steckverbindung).

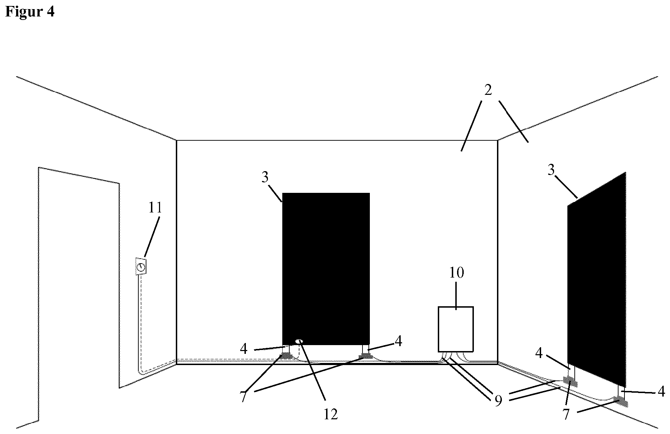

Figur 4 zeigt eine schematische Darstellung einer erfindungsgemäßen Flächenheizvorrichtung (1) mit zwei Heizschichten (3), die an zwei benachbarten Wänden (2) eines Raumes angebracht sind. Die insgesamt vier Kontaktelemente (4) sind jeweils mit einem Übergangselement (7) elektrisch leitend verbunden, wobei jedes Übergangselement über entsprechende elektrische Leitungen (9) mit dem Steuerungselement (10) elektrisch leitend verbunden sind. Das Steuerungselement (10) kann, wie in Figur 4 gezeigt, im gleichen Raum wie die Heizschichten (3) angebracht sein. In einer alternativen (nicht gezeigten) Ausführungsform kann sich das Steuerungselement (10) an einem anderen Ort (z.B. in einem Nebenraum, in einem zentralen Schalt- oder Sicherungsraum, an den der zu beheizende Raum angeschlossen ist, oder in einem Keller) befinden. Weiterhin weist die in Figur 4 gezeigte Ausführungsform einen Thermostat (11) und einen Temperatursensor (12) auf, die dazu dienen, die Bedienbarkeit und Sicherheit der erfindungsgemäßen Flächenheizvorrichtung zu erhöhen (einerseits, da mittels des Thermostaten (11) eine einfache Einstellung der gewünschten Raumtemperatur realisierbar ist, und andererseits, da durch den Temperatursensor (12) eine übermäßig heiße Flächenheizvorrichtung (z.B. mit einer Temperatur an der Oberfläche der Heizschicht von über 50°C) rechtzeitig erkennbar und behebbar (z.B. durch Aktivierung einer Abschaltautomatik) ist.

### Bezugszeichenliste

- 1: Flächenheizvorrichtung
- 2: zu beheizende Wand
- 3: Heizschicht
- 4: Kontaktelement
- 5: Schutz/Ausgleichsschicht
- 6: Farbschicht
- 7: Übergangselement
- 8: Halteelement
- 9: elektrische Leitung
- 10: Steuerungselement
- 11: Thermostat
- 12: Temperatursensor

## Patentansprüche

1. Heizfarbe, die mindestens zwei Leitfähigkeitsadditive und mindestens ein Bindemittel umfasst, wobei die Leitfähigkeitsadditive Graphit und Ruß umfassen, das Bindemittel ein elektrisch nicht leitfähiges Polymer oder ein anorganisches Bindemittel umfasst, und die Heizfarbe frei von elektrisch leitfähigen Carbonfasern und Kohlenstoff-Nanotubes ist und dadurch gekennzeichtet, dass der Graphit synthetischen Ursprungs ist.

2. Heizfarbe nach Anspruch 1, die ferner
(i) ein Dispergiermittel umfasst, das vorzugsweise Wasser ist; und/oder
(ii) ein oder mehrere Zusatzstoffe aufweist, wobei der eine oder die mehreren Zusatzstoffe vorzugsweise aus der Gruppe ausgewählt sind, die aus Dispergiermitteln, Netzmitteln, Rheologieadditiven, Korrosionsschutzmitteln, Mitteln zum Erhöhen der Kratzfestigkeit und Bioziden besteht.

3. Flächenheizvorrichtung (1) zum Beheizen einer Wand (2), aufweisend:
(a) eine Heizschicht (3), die auf der zu beheizenden Wand (2) aufbringbar ist und die die Heizfarbe nach Anspruch 1 oder 2 enthält,
(b) zwei elektrisch leitfähige Kontaktelemente (4), die an der Heizschicht (3) derart anordbar sind, dass die Heizschicht (3) mit elektrischer Spannung und/oder elektrischen Strom beaufschlagbar ist, und
(e) zwei Übergangselemente (7), die an die Kontaktelemente (4), insbesondere elektrisch leitend, anbringbar sind, wobei jedes der zwei Übergangselemente (7) ein Halteelement (8) zum kraft- und/oder formschlüssigen Befestigen des Übergangselements (7) an der Wand (2), insbesondere in einem Bereich der zu beheizenden Wand (2), auf dem keine Heizschicht (3) und keine Kontaktelement (4) aufgebracht ist, aufweist.

4. Flächenheizvorrichtung (1) nach Anspruch 3, die ferner aufweist:
(c) ein Steuerungselement (10), das eine Spannungsquelle und eine Steuerungsvorrichtung zum Steuern der Flächenheizvorrichtung (1) umfasst, wobei das Steuerungselement (10) vorzugsweise ferner einen Thermostat (11) aufweist, und
(d) zwei elektrische Leitungen (9), wobei die erste elektrische Leitung mit einem der Pole der Spannungsquelle verbunden ist und die zweite elektrische Leitung mit dem anderen Pol der Spannungsquelle verbunden ist,
wobei das erste Übergangselement (7) die erste elektrische Leitung mit einem der zwei elektrisch leitfähigen Kontaktelemente (4) elektrisch leitend verbindet und das zweite Übergangselement (7) die zweite elektrische Leitung mit dem anderen der zwei elektrisch leitfähigen Kontaktelemente (4) elektrisch leitend verbindet.

5. Flächenheizvorrichtung (1) nach Anspruch 3 oder 4, wobei die zwei elektrisch leitfähigen Kontaktelemente (4) an sich gegenüberliegenden Randbereichen der Heizschicht (3) anordbar sind.

6. Flächenheizvorrichtung (1) nach Anspruch 4 oder 5, wobei das Steuerungselement (10) eine Abschaltautomatik der Spannungsquelle aufweist, wobei vorzugsweise bei (I) Entstehung von Funken auf der Heizschicht (3) oder (II) einer Abweichung von mindestens 1% des durch die Heizschicht (3) fließenden Stroms vom Normalwert die Abschaltautomatik aktiviert, d.h. die Spannungsquelle abgeschaltet wird.

7. Flächenheizvorrichtung (1) nach einem der Ansprüche 3 bis 6, wobei
(i) die zwei elektrisch leitfähigen Kontaktelemente (4) elektrisch leitfähige Metallstreifen, insbesondere aus Kupfer, umfassen, wobei bevorzugt jedes der zwei elektrisch leitfähigen Kontaktelemente (4) eine Klebschicht aufweist und die Gesamtdicke der Kontaktelemente (4) vorzugsweise maximal 100 µm, bevorzugt maximal 90 µm, mehr bevorzugt maximal 80 µm, mehr bevorzugt maximal 75 µm beträgt;
(ii) die zwei elektrisch leitfähigen Kontaktelemente (4) parallel zueinander angeordnet sind und insbesondere der Abstand zwischen ihren Innenkanten 50 bis 80 cm, vorzugsweise 60 bis 75 cm, mehr bevorzugt 65 bis 70 cm beträgt; und/oder
(iii) die Heizschicht (3) die Form eines Rechtecks oder Parallelogramms aufweist und insbesondere eine Fläche von 0,90 bis 1,10 m², vorzugsweise 0,95 bis 1,05 m² aufweist.

8. Kit zum Herstellen einer Flächenheizvorrichtung (1) an einer Wand (2), wobei das Kit umfasst:
(1) eine Heizfarbe nach Anspruch 1 oder 2,
(2) mindestens zwei elektrisch leitfähige Kontaktelemente (4) und
(5) mindestens zwei Übergangselemente (7), die an die Kontaktelemente (4), insbesondere elektrisch leitend, anbringbar sind, wobei jedes der zwei Übergangselemente (7) mindestens ein Halteelement (8) zum kraft- und/oder formschlüssigen Befestigen des Übergangselements (7) an einer Wand (2) aufweist.

9. Kit nach Anspruch 8,
(i) das ferner umfasst:
(3) ein Steuerungselement (10), das eine Spannungsquelle und eine Steuerungsvorrichtung zum Steuern der Flächenheizvorrichtung (1) umfasst, und
(4) mindestens zwei elektrische Leitungen (9),
wobei das Steuerungselement (10) vorzugsweise eine Abschaltautomatik der Spannungsquelle und/oder einen Thermostat (11) aufweist; und/oder
(ii) wobei die zwei elektrisch leitfähigen Kontaktelemente (4) elektrisch leitfähige Metallstreifen, insbesondere aus Kupfer, umfassen, wobei bevorzugt jedes der zwei elektrisch leitfähigen Kontaktelemente (4) eine Klebschicht aufweist und vorzugsweise die Gesamtdicke der Kontaktelemente (4) maximal 100 µm, bevorzugt, maximal 90 µm, mehr bevorzugt maximal 80 µm, mehr bevorzugt maximal 75 µm beträgt.

10. Verwendung einer Heizfarbe nach einem der Ansprüche 1 oder 2 oder eines Kits nach einem der Ansprüche 8 oder 9 zur Herstellung einer Flächenheizvorrichtung (1) an einer Wand (2).

11. Verwendung einer Flächenheizvorrichtung (1) nach einem der Ansprüche 3 bis 7 zum Beheizen eines Raumes oder zum Abschirmen des Raumes vor elektromagnetischer Strahlung.

12. Verfahren zur Herstellung einer Flächenheizvorrichtung (1) an einer Wand (2), umfassend den Schritt eines Auftragens der Heizfarbe nach einem der Ansprüche 1 oder 2 auf die Wand (2)

13. Verfahren zum Beheizen eines Raumes, umfassend die Schritte:
(i) Auftragen der Heizfarbe nach einem der Ansprüche 1 oder 2 auf mindestens eine zu beheizende Wand (2) des Raumes zur Erzeugung mindestens einer Heizschicht (3) und
(ii) Beaufschlagen der Heizschicht (3) mit elektrischer Spannung und/oder elektrischem Strom.

14. Verfahren nach Anspruch 12 oder 13, ferner umfassend die Schritte:
(a) Anbringen von zwei Kontaktelementen (4) für jede der mindestens einen Heizschicht (3) an der zu beheizenden Wand (2);
(b) Bereitstellen von zwei Übergangselementen (7) die an die Kontaktelemente (4), insbesondere elektrisch leitend, anbringbar sind, für jede der mindestens einen Heizschicht (3), wobei jedes der zwei Übergangselemente (7) ein Halteelement (8) zum kraft- und/oder formschlüssigen Befestigen des Übergangselements (7) an der Wand (2) aufweist; und
(c) Herstellen einer elektrisch leitenden Verbindung zwischen dem ersten Kontaktelement (4) und dem ersten Übergangselement (7) sowie zwischen dem zweiten Kontaktelement (4) und dem zweiten Übergangselement (7) für jede der mindestens einen Heizschicht (3); und gegebenenfalls
(d) kraft- und/oder formschlüssiges Befestigen der Übergangselemente (7) an der Wand (2),
wobei vorzugsweise der Schritt (a) vor dem Schritt eines Auftragen der Heizfarbe erfolgt und das Auftragen der Heizfarbe ein Auftragen der Heizfarbe zumindest zwischen und auf den Kontaktelemente (4) umfasst, wobei mehr bevorzugt lediglich der Abschnitt der Kontaktelemente (4), der unmittelbar mit den Übergangselementen (7) verbindbar ist, von der Heizfarbe unbedeckt verbleibt.

15. Verfahren nach einem der Ansprüche 12 bis 14, wobei das Auftragen der Heizfarbe mittels Rollen, Sprühen, Streichen, Pinseln, Rakeln, Spachteln, Drucken oder einer Kombination davon erfolgt.

## Claims

1. A heating paint which comprises at least two conductivity additives and at least one binder, the conductivity additives comprising graphite and carbon black, the binder comprising an electrically nonconductive polymer or an inorganic binder, and the heating paint being free from electrically conductive carbon fibers and carbon nanotubes, and **characterized in that** the graphite is synthetic in origin.

2. The heating paint as claimed in claim 1, which further
(i) comprises a dispersant, which preferably is water; and/or
(ii) comprises one or more adjuvants, the one or more adjuvants being selected preferably from the group consisting of dispersants, wetting agents, rheological additives, corrosion inhibitors, agents for increasing the scratch resistance, and biocides.

3. A surface heating device (1) for heating a wall (2), comprising:
(a) a heating layer (3) which can be applied to the wall (2) to be heated and which contains the heating paint as claimed in claim 1 or 2,
(b) two electrically conductive contact elements (4), which can be arranged on the heating layer (3) in such a way that electrical voltage and/or electrical current can be applied to the heating layer (3), and
(e) two transition elements (7) which can be mounted to the contact elements (4), particularly with electrical conduction, each of the two transition elements (7) comprising a retaining element (8) for positively and/or nonpositively securing the transition element (7) on the wall (2), particularly in a region of the wall (2) to be heated that does not bear any applied heating layer (3) and any applied contact element (4).

4. The surface heating device (1) as claimed in claim 3, which further comprises:
(c) a control element (10) which comprises a voltage source and a control device for controlling the surface heating device (1), wherein the control element (10) preferably further comprises further comprises a thermostat (11), and
(d) two electrical leads (9), the first electrical lead being connected to one of the terminals of the voltage source, and the second electrical lead being connected to the other terminal of the voltage source,
the first transition element (7) connecting the first electrical lead, with electrical conduction, to one of the two electrically conductive contact elements (4), and the second transition element (7) connecting the second electrical lead, with electrical conduction, to the other of the two electrically conductive contact elements (4).

5. The surface heating device (1) as claimed in claim 3 or 4, wherein the two electrically conductive contact elements (4) can be arranged on opposite marginal regions of the heating layer (3).

6. The surface heating device (1) as claimed in claim 4 or 5, wherein the control element (10) comprises an automatic voltage-source switch-off means, the automatic switch-off means being activated, i.e., the voltage source being switched off, preferably when (I) sparks develop on the heating layer (3) or (II) the current flowing through the heating layer (3) deviates from the standard value by at least 1%.

7. The surface heating device (1) as claimed in one of claims 3 to 6, wherein
(i) the two electrically conductive contact elements (4) comprise electrically conductive metal strips, particularly of copper, with preferably each of the two electrically conductive contact elements (4) comprising an adhesive layer, and the overall thickness of the contact elements (4) being preferably not more than 100 µm, preferably not more than 90 µm, more preferably not more than 80 µm, more preferably not more than 75 µm;
(ii) the two electrically conductive contact elements (4) are arranged parallel to one another and particularly the distance between their inside edges is 50 to 80 cm, preferably 60 to 75 cm, more preferably 65 to 70 cm; and/or
(iii) the heating layer (3) has the shape of a rectangle or parallelogram and particularly has an area of 0.90 to 1.10 m², preferably 0.95 to 1.05 m².

8. A kit for producing a surface heating device (1) on a wall (2), wherein the kit comprises:
(1) a heating paint as claimed in claim 1 or 2,
(2) at least two electrically conductive contact elements (4), and
(5) at least two transition elements (7) which can be mounted to the contact elements (4), particularly with electrical conduction, each of the two transition elements (7) comprising at least one retaining element (8) for positively and/or nonpositively securing the transition element (7) on a wall (2).

9. The kit as claimed in claim 8,
(i) which further comprises:
(3) a control element (10) which comprises a voltage source and a control device for controlling the surface heating device (1), and
(4) at least two electrical leads (9),
wherein the control element (10) preferably comprises an automatic voltage-source switch-off means and/or a thermostat (11); and/or
(ii) wherein the two electrically conductive contact elements (4) comprise electrically conductive metal strips, particularly of copper, with preferably each of the two electrically conductive contact elements (4) comprising an adhesive layer and preferably the overall thickness of the contact elements (4) being not more than 100 µm, preferably not more than 90 µm, more preferably not more than 80 µm, more preferably not more than 75 µm.

10. The use of a heating paint as claimed in one of claims 1 or 2 or of a kit as claimed in one of claims 8 or 9 for producing a surface heating device (1) on a wall (2).

11. The use of a surface heating device (1) as claimed in one of claims 3 to 7 for heating a room or for shielding the room from electromagnetic radiation.

12. A method for producing a surface heating device (1) on a wall (2), comprising the step of applying the heating paint as claimed in one of claims 1 or 2 to the wall (2).

13. A method for heating a room, comprising the steps of:
(i) applying the heating paint as claimed in one of claims 1 or 2 to at least one wall (2) of the room that is to be heated, to generate at least one heating layer (3), and
(ii) applying electrical voltage and/or electrical current to the heating layer (3).

14. The method as claimed in claim 12 or 13, further comprising the steps of:
(a) mounting two contact elements (4) for each of the at least one heating layer (3) on the wall (2) to be heated;
(b) providing two transition elements (7) which can be mounted to the contact elements (4), particularly with electrical conduction, for each of the at least one heating layer (3), each of the two transition elements (7) comprising a retaining element (8) for positively and/or nonpositively securing the transition element (7) on the wall (2); and
(c) producing an electrically conducting connection between the first contact element (4) and the first transition element (7) and also between the second contact element (4) and the second transition element (7) for each of the at least one heating layer (3); and optionally
(d) positively and/or nonpositively securing the transition elements (7) on the wall (2),
wherein preferably the step (a) takes place before the step of applying the heating paint, and the applying of the heating paint comprises an application of the heating paint at least between and to the contact elements (4), with more preferably the only section of the contact elements (4) remaining uncovered by the heating paint being that connectable directly to the transition elements (7).

15. The method as claimed in one of claims 12 bis 14, wherein the applying of the heating paint takes place by means of rolling, spraying, spreading, brushing, knife coating, troweling, printing, or a combination thereof.

## Revendications

1. Peinture chauffante comprenant au moins deux additifs de conductivité et au moins un agent liant, dans laquelle les additifs de conductivité comportent du graphite et du noir de carbone, l'agent liant comporte un polymère non conducteur d'électricité ou un liant inorganique, et la peinture chauffante est exempte de fibres de carbone conductrices d'électricité et de nanotubes de carbone et **caractérisée en ce que** le graphite est d'origine synthétique.

2. Peinture chauffante selon la revendication 1, qui, en outre,
(i) comprend un agent dispersant, qui est de préférence de l'eau ; et/ou
(ii) comprend un ou plusieurs additifs, lequel ou lesquels étant de préférence sélectionnés dans le groupe constitué par des agents dispersants, des agents mouillants, des additifs rhéologiques, des agents anticorrosion, des agents destinés à augmenter la résistance aux rayures et des biocides.

3. Dispositif de chauffage de surface (1) destiné à chauffer un mur (2), comprenant :
(a) une couche chauffante (3) pouvant être appliquée sur le mur (2) à chauffer et contenant la peinture chauffante selon la revendication 1 ou 2,
(b) deux éléments de contact conducteurs d'électricité (4) pouvant être disposés au niveau de la couche chauffante (3) de sorte que la couche chauffante (3) puisse être alimentée en tension électrique et/ou en courant électrique, et
(e) deux éléments de transition (7) pouvant être reliés aux éléments de contact (4), en particulier de manière à conduire l'électricité, chacun des deux éléments de transition (7) présentant un élément de retenue (8) permettant de fixer par adhérence et/ou par complémentarité de forme l'élément de transition (7) sur le mur (2), en particulier sur une zone du mur (2) à chauffer sur laquelle ne se trouve ni couche chauffante (3) ni élément de contact (4).

4. Dispositif de chauffage de surface (1) selon la revendication 3, comprenant en outre :
(c) un élément de commande (10) comprenant une source de tension et un dispositif de commande servant à commander le dispositif de chauffage de surface (1), l'élément de commande (10) comportant de préférence également un thermostat (11), et
(d) deux câbles électriques (9), le premier câble électrique étant connecté à l'un des pôles de la source de tension et le second câble électrique étant connecté à l'autre pôle de la source de tension,
dans lequel le premier élément de transition (7) relie le premier câble électrique à l'un des deux éléments de contact conducteurs d'électricité (4) de manière à conduire l'électricité et
le second élément de transition (7) relie le second câble électrique à l'autre des deux éléments de contact conducteurs d'électricité (4) de manière à conduire l'électricité.

5. Dispositif de chauffage de surface (1) selon la revendication 3 ou 4, dans lequel les deux éléments de contact conducteurs d'électricité (4) peuvent être disposés dans des zones périphériques de la couche chauffante (3), l'une opposée à l'autre.

6. Dispositif de chauffage de surface (1) selon la revendication 4 ou 5, dans lequel l'élément de commande (10) comprend un système automatique de coupure de la source de tension et, de préférence, en cas de (I) formation d'étincelles sur la couche chauffante (3) ou (II) d'écart d'au moins 1 % de l'intensité du courant traversant la couche chauffante (3) par rapport à la valeur normale, le système automatique de coupure est activé, c'est-à-dire que la source de tension est coupée.

7. Dispositif de chauffage de surface (1) selon l'une des revendications 3 à 6, dans lequel
(i) les deux éléments de contact conducteurs d'électricité (4) comprennent des bandes métalliques conductrices d'électricité, en particulier en cuivre, chacun des deux éléments de contact conducteurs d'électricité (4) présentant de préférence une couche adhésive et les éléments de contact (4) possédant préférablement une épaisseur totale maximale de 100 µm, plus préférablement 90 µm, encore plus préférablement 80 µm et idéalement 75 µm ;
(ii) les deux éléments de contact conducteurs d'électricité (4) sont disposés parallèlement l'un à l'autre et, en particulier, la distance entre leurs bords intérieurs est comprise entre 50 et 80 cm, préférablement entre 60 et 75 cm et idéalement entre 65 et 70 cm ; et/ou
(iii) la couche chauffante (3) a la forme d'un rectangle ou d'un parallélogramme et possède plus particulièrement une surface comprise entre 0,90 et 1,10 m², de préférence entre 0,95 et 1,05 m².

8. Kit de fabrication d'un dispositif de chauffage de surface (1) à appliquer sur un mur (2), le kit comprenant :
(1) une peinture chauffante selon la revendication 1 ou 2,
(2) au moins deux éléments de contact conducteurs d'électricité (4) et
(5) au moins deux éléments de transition (7) pouvant être reliés aux éléments de contact (4), en particulier de manière à conduire l'électricité, chacun des deux éléments de transition (7) présentant au moins un élément de retenue (8) permettant de fixer par adhérence et/ou par complémentarité de forme l'élément de transition (7) sur un mur (2).

9. Kit selon la revendication 8,
(i) comportant en outre :
(3) un élément de commande (10) comprenant une source de tension et un dispositif de commande servant à commander le dispositif de chauffage de surface (1), et
(4) au moins deux câbles électriques (9), l'élément de commande (10) présentant de préférence un système automatique de coupure de la source de tension et/ou un thermostat (11) ; et/ou
(ii) dans lequel les deux éléments de contact conducteurs d'électricité (4) comprennent des bandes métalliques conductrices d'électricité, en particulier en cuivre, chacun des deux éléments de contact conducteurs d'électricité (4) présentant de préférence une couche adhésive et les éléments de contact (4) possédant préférablement une épaisseur totale maximale de 100 µm, plus préférablement 90 µm, encore plus préférablement 80 µm et idéalement 75 µm.

10. Utilisation d'une peinture chauffante selon l'une des revendications 1 et 2 ou d'un kit selon l'une des revendications 8 et 9 pour la fabrication d'un dispositif de chauffage de surface (1) à appliquer sur un mur (2).

11. Utilisation d'un dispositif de chauffage de surface (1) selon l'une des revendications 3 à 7 pour chauffer une pièce ou protéger une pièce du rayonnement électromagnétique.

12. Procédé de fabrication d'un dispositif de chauffage de surface (1) à appliquer sur un mur (2), comprenant une étape d'application sur le mur (2) de la peinture chauffante selon l'une des revendications 1 et 2.

13. Procédé de chauffage d'une pièce, comprenant les étapes suivantes :
(i) application de la peinture chauffante selon l'une des revendications 1 et 2 sur au moins un mur (2) à chauffer de la pièce pour produire au moins une couche chauffante (3) et
(ii) application à la couche chauffante (3) d'une tension électrique et/ou d'un courant électrique.

14. Procédé selon la revendication 12 ou 13, comprenant en outre les étapes suivantes :
(a) fixation de deux éléments de contact (4) pour chacune des au moins une couche chauffante (3) sur le mur (2) à chauffer ;
(b) préparation pour chacune des au moins une couche chauffante (3) de deux éléments de transition (7) pouvant être reliés aux éléments de contact (4), en particulier de manière à conduire l'électricité , chacun des deux éléments de transition (7) présentant un élément de retenue (8) permettant de fixer par adhérence et/ou par complémentarité de forme l'élément de transition (7) sur le mur (2) ; et
(c) fabrication d'une liaison conductrice d'électricité entre le premier élément de contact (4) et le premier élément de transition (7) ainsi qu'entre le second élément de contact (4) et le second élément de transition (7) pour chacune des au moins une couche chauffante (3) ; et, le cas échéant,
(d) fixation par adhérence et/ou par complémentarité de forme des éléments de transition (7) sur le mur (2),
dans lequel, de préférence, l'étape (a) est réalisée avant l'étape d'application de la peinture chauffante et l'application de la peinture chauffante comprend au moins une application de la peinture chauffante entre et sur les éléments de contact (4), et, plus préférablement, seule la partie des éléments de contact (4) pouvant être directement connectée aux éléments de transition (7) n'est pas recouverte par la peinture chauffante.

15. Procédé selon l'une des revendications 12 à 14, dans lequel l'application de la peinture chauffante s'effectue au rouleau, par pulvérisation, par enduction, au pinceau, par raclage, à la spatule, par impression ou par une combinaison de ces techniques.
